# EUROPEAN PATENT SPECIFICATION

(11) **EP 3 108 774 B1**
(45) Date of publication and mention of the grant of the patent: **13.01.2021**
(21) Application number: 15173492.8
(22) Date of filing: 24.06.2015
(51) Int. Cl.: A47J 27/08, A47J 27/04, A47J 27/16, F24C 15/22, F24C 15/32

(54) **COOKING VESSEL FOR AN OVEN CAVITY OF A COOKING OVEN**
KOCHGEFÄSS FÜR EINEN OFENINNENRAUM EINES BACKOFENS
RECIPIENT DE CUISSON POUR LA CAVITE D'UN FOUR DE CUISSON

(43) Date of publication of application: 28.12.2016
(73) Proprietor: Electrolux Appliances Aktiebolag, 105 45 Stockholm (SE)
(72) Inventor: FARALDI, Paolo, 47122 Forli (IT); FURLANETTO, Riccardo, 33170 Pordenone (IT); CARNEVALI, Marco, 47122 Forli (IT)
(74) Representative: Electrolux Group Patents

(56) References cited:
- EP-A1- 0 434 047
- EP-A1- 2 468 150

## Description

The present invention relates to a cooking oven comprising at least one cooking vessel arrangeable or arranged inside an oven cavity of said cooking oven according to the preamble of claim 1. Moreover, the present invention relates to a method for performing a steam cooking process according to the preamble of claim 9.

Cooking ovens usually comprise a temperature control system in order to adjust and keep a set cooking temperature. Mostly, a temperature sensor is arranged inside the oven cavity. Said temperature sensor detects the temperature in the oven cavity itself. Furthermore, some cooking ovens comprise an additional temperature sensor insertable into the food stuff, e.g. meat, being cooked. The detected temperature values of said additional temperature sensor may be used for controlling the heating elements. Further, the both temperature sensors may be used for providing a temperature profile in the oven cavity and inside the food stuff.

Steam cooking ovens are special types of cooking ovens, wherein steam a generated and delivered in order to support the cooking process. Steam is generated by a steam generator of the cooking oven and delivered into the oven cavity via a nozzle. There are two kinds of known steam cooking ovens. A first kind is a pure steam cooking oven, wherein food stuff is prepared only by steam from the ted by the steam generator. Said pure steam cooking oven does not comprise any further heating elements besides said steam generator. A second kind is a combined steam cooking oven, wherein steam is used either exclusively for the cooking process or in combination with other heating elements.

The combined steam cooking oven is often provided with a dedicated cooking vessel connected to the steam generator. The steam is concentrated in said cooking vessel. The oven cavity may be heated by further heating elements. The remaining oven cavity outside the cooking vessel may be available for other cooking functions.

However, there is no information about the thermal conditions inside the cooking vessel during the cooking process. Thereby it is difficult for the user to estimate the cooking time of the cooking process.

EP 2 468 150 A1 discloses a cooking vessel for a steam cooking process. The cooking vessel is arrangeable inside the oven cavity of the cooking oven. The cooking vessel comprises at least one electric heating element arranged at the bottom of said cooking vessel. A fluid reservoir is arranged above the heating element. Steam is generated by heating and evaporating fluid in the fluid reservoir by the heating element. The heating element is connectable to an electrical connection inside the oven cavity. A humidity sensor is arranged inside the cooking vessel, so that the power of the heating element and the amount of steam inside the cooking vessel is controllable. The cooking vessel comprises a pressure control valve in order to limit the pressure in said cooking vessel. However, the cooking vessel with the electric heating element is relative complex.

It is an object of the present invention to provide a cooking oven comprising a cooking vessel for performing a steam cooking process, which allows a determination of the thermal conditions inside the cooking vessel during the cooking process, wherein the cooking vessel is realised by low complexity.

The object of the present invention is achieved by the cooking oven according to claim 1.

According to the present invention the control unit is provided for controlling a steam generator of the cooking oven, wherein the heating element and the steam generator are arranged out of the cooking vessel.

The core of the present invention is that the cooking vessel is heated up by components of the cooking oven. The cooking process and the heating element and/or steam generator of said cooking oven may be controlled in dependence of the humidity and/or the temperature inside the cooking vessel. The thermal conditions inside the cooking vessel provide accurate information about the state of the food stuff. The cooking vessel is confined or confinable in such a way, that the humidity inside said cooking vessel is higher as outside said cooking vessel on the one hand and an overpressure inside said cooking vessel is limited on the other hand.

In particular, the cooking vessel includes a lower part and an upper part forming the confined or confinable cooking vessel. The cooking vessel is realized by low complexity.

For example, at least one sealing is arranged between the lower part and the upper part of the cooking vessel, wherein said sealing allows the higher humidity inside said cooking vessel as outside said cooking vessel.

Preferably, the at least one sealing is made of one or more food grade silicone materials.

According to one embodiment of the present invention, the cooking vessel includes a steam inlet connectable or connected to a steam generator of the cooking oven. In this case, the cooking vessel is provided for a steam cooking oven or a combined steam cooking oven.

Further, the steam may be generated by water, liquids and/or moisture contained in the food stuff, when the oven cavity is heated. Thus, the cooking vessel may be used in a cooking oven without any steam cooking function.

According to a further embodiment of the present invention, the cooking vessel includes a water basin arranged at the bottom of said cooking vessel, wherein food stuff is arranged or arrangeable above said water basin. Also in this case, the cooking vessel may be used in a cooking oven, which requires not necessarily the steam cooking function.

Further, the control unit is connected or connectable to at least one cavity sensor of the cooking oven. Besides the thermal conditions inside the cooking vessel, additionally the temperature out of said cooking vessel may be detected.

Moreover, the cooking oven may comprise at least one steam generator and at least one steam outlet, wherein said steam outlet is arranged inside the oven cavity. The cooking vessel may be directly connected to the steam outlet of the steam generator.

According to the method of the present invention, a steam generator of the cooking oven is controlled by at least one control unit in dependence of the humidity and/or the temperature inside the cooking vessel, wherein the heating element and the steam generator are arranged out of the cooking vessel.

The cooking process is controlled in dependence of the humidity and/or the temperature inside the cooking vessel. The thermal conditions inside the cooking vessel provide accurate information about the state of the food stuff.

According to one embodiment of the present invention, the steam is generated by at least one steam generator of the cooking oven, wherein the cooking vessel is connected to the at least one steam generator. In this case, the cooking vessel is provided for a steam cooking oven or a combined steam cooking oven.

According to another embodiment of the present invention, the steam is generated by water contained in a water basin arranged at the bottom of said cooking vessel, when the oven cavity is heated. In this case, the cooking vessel may be used in a cooking oven, which requires not necessarily the steam cooking function.

According to a further embodiment of the present invention, the steam is generated by water, liquids and/or moisture contained in the food stuff, when the oven cavity is heated. Also in this case, the cooking vessel may be used in a cooking oven without any steam cooking function.

The three embodiments mentioned above may be combined. Thus, the steam may be generated simultaneously by the steam generator, by the water in the water basin and/or by the water, liquids and/or moisture contained in the food stuff.

At last, the method is performed by the cooking vessel and/or by the cooking oven mentioned above.

Novel and inventive features of the present invention are set forth in the appended claims.

The present invention will be described in further detail with reference to the drawing, in which
- FIG 1: illustrates a schematic sectional side view of a cooking oven with a cooking vessel according to a first embodiment of the present invention,
- FIG 2: illustrates a schematic sectional side view of the cooking oven with a cooking vessel according to a second embodiment of the present invention, and
- FIG 3: illustrates a schematic sectional side view of the cooking oven with a cooking vessel according to a third embodiment of the present invention.

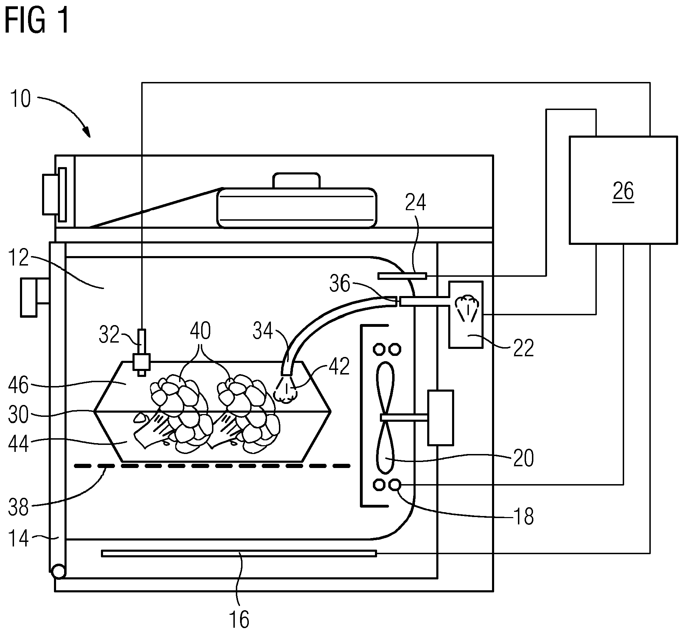

FIG 1 illustrates a schematic sectional side view of a cooking oven 10 with a cooking vessel 30 according to a first embodiment of the present invention. The cooking oven 10 includes an oven cavity 12. An oven door 14 is arranged at the front side of the cooking oven 10 and provided for closing the oven cavity 12. In this example, the cooking oven 10 comprises a bottom heating element 16, a rear heating element 18 and a fan 20. The bottom heating element 16 and the rear heating element 18 are electric heating elements. The bottom heating element 16 is arranged below a bottom plate of the oven cavity 12. The rear heating element 18 is arranged in front of a rear wall of the oven cavity 12. The fan 20 encloses the rear heating element 18.

The cooking oven 10 comprises a cavity sensor 24 arranged inside the oven cavity 12. In this example, the cavity sensor 24 is arranged in the rear and upper portion of the oven cavity 12. In particular, the cavity sensor 24 is a temperature sensor. Alternatively or additionally, the cavity sensor 24 is provided as a humidity sensor. Further, the cooking oven 10 includes a control unit 26 electrically connected to the cavity sensor 24, the fan 20 and the heating elements 16 and 18. The control unit 26 may be either an integrated part of the cooking oven 10 or an external device arranged out of the cooking oven 10.

According to the first embodiment, the cooking oven 10 comprises a steam generator 22. In this example, the steam generator 22 is arranged inside the rear wall of the cooking oven 10. The steam generator 22 includes a steam outlet 36 arranged at the rear wall of the oven cavity 12. The steam generator 22 is connected to the control unit 26. The cooking oven 10 of the first embodiment is a combined steam oven, wherein steam may be used alone or in combination with other heating elements for the cooking process.

The cooking vessel 30 is arranged inside the oven cavity 12 of the cooking oven 10. In this example, the cooking oven 10 comprises a grid 38 or tray 38 insertable or inserted inside the oven cavity 12. The cooking vessel 30 is placed upon said grid 38 or tray 38 inside the oven cavity 12. Food stuff 40 is arranged inside the cooking vessel 30. In this example, the cooking vessel 30 includes a lower part 44 and an upper part 46. The cooking vessel 30 is confined. However, the cooking vessel 30 is not hermetically sealed, since an overpressure is not required inside said cooking vessel 30. The cooking vessel 30 is designed that different temperature and humidity may occur inside said cooking vessel 30 on the one hand and in the residual oven cavity 12 on the other hand.

The cooking vessel 30 includes a vessel sensor 32. The vessel sensor 32 is provided as a temperature sensor and/or as a humidity sensor. In this example, the vessel sensor 32 is arranged in the upper part 46 of the cooking vessel 30. The vessel sensor 32 is connected or connectable to the control unit 26 of the cooking oven 10. The vessel sensor 32 arranged inside the cooking vessel 30 allows a homogeneous temperature control regardless of the characteristics of the cooking vessel 30 and of the food stuff 40 to be treated. Thereby, a closed loop control is achieved.

Further, the cooking vessel 30 includes a steam inlet 34. In this example, the steam inlet 34 is arranged in the upper part 46 of the cooking vessel 30. The steam inlet 34 is connected or connectable to the steam outlet 36 of the cooking oven 10. Steam 42 is inserted into the cooking vessel 30 by the steam inlet 34.

Since the volume of the cooking vessel 30 is clearly smaller than the volume of the oven cavity 12, a saturated steam environment is obtained inside the cooking vessel 30 by less effort. Since the vessel sensor 32 is connected or connectable to the control unit 26 of the cooking oven 10, the humidity and/or temperature in the cooking vessel 30 is controllable.

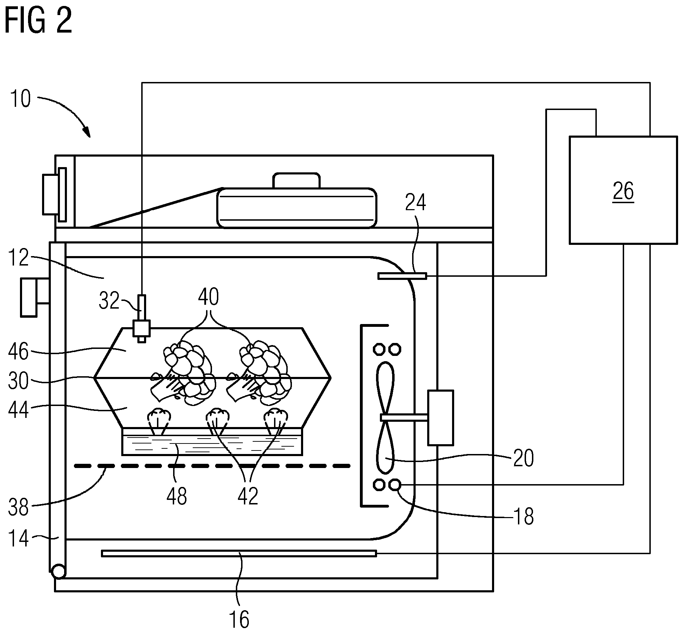

FIG 2 illustrates a schematic sectional side view of the cooking oven 10 with a cooking vessel 30 according to a second embodiment of the present invention. The cooking oven 10 includes the oven cavity 12 and the oven door 14 provided for closing said oven cavity 12. Further, the cooking oven 10 comprises the bottom heating element 16, the rear heating element 18 and the fan 20, wherein the bottom heating element 16 and the rear heating element 18 are electric heating elements. The fan 20 encloses the rear heating element 18.

Moreover, the cooking oven 10 comprises the cavity sensor 24 arranged inside the oven cavity 12. Said cavity sensor 24 may be a temperature sensor and/or a humidity sensor. The cooking oven 10 includes the control unit 26 electrically connected to the cavity sensor 24, the fan 20 and the heating elements 16 and 18. The control unit 26 is either an integrated part of the cooking oven 10 or an external device arranged out of the cooking oven 10.

Unlike the first embodiment, the cooking oven 10 according to the second embodiment does not comprise any steam generator. Thus, the cooking oven 10 of the second embodiment as such is designed without steam cooking function.

The cooking vessel 30 according to the second embodiment is arranged inside the oven cavity 12 of the cooking oven 10. In this example, the cooking oven 10 comprises a grid 38 or tray 38 insertable or inserted inside the oven cavity 12, wherein the cooking vessel 30 is placed upon said grid 38 or tray 38. The food stuff 40 is arranged inside the cooking vessel 30. Also in this example, the cooking vessel 30 includes the lower part 44 and the upper part 46. The cooking vessel 30 is confined, but not hermetically sealed. An overpressure inside the cooking vessel 30 is not required. The cooking vessel 30 is designed that different temperature and humidity may occur inside said cooking vessel 30 on the one hand and in the residual oven cavity 12 on the other hand.

The cooking vessel 30 includes the vessel sensor 32 provided as temperature sensor and/or humidity sensor. In this example, the vessel sensor 32 is arranged in the upper part 46 of the cooking vessel 30. The vessel sensor 32 is connected or connectable to the control unit 26 of the cooking oven 10. The vessel sensor 32 inside the cooking vessel 30 allows the homogeneous temperature control regardless of the characteristics of the cooking vessel 30 and of the food stuff 40 to be treated, so that the closed loop control is achieved.

Further, the cooking vessel 30 according to the second embodiment includes a water basin 48 arranged at the bottom of the cooking vessel 30. The water basin 48 is filled by water. When the oven cavity 12 is heated at a temperature more than 100°C, then the water in the water basin 48 is evaporated. The emerging steam is used for steam cooking of the food stuff 40 in the cooking vessel 30.

The cooking vessel 30 according to the second embodiment allows steam cooking function in a conventional cooking oven 10, which is rather not provided for steam cooking function.

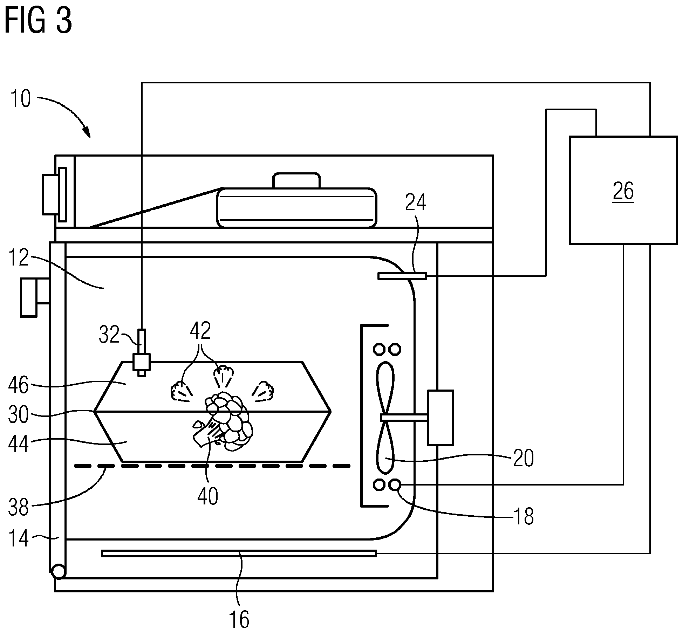

FIG 3 illustrates a schematic sectional side view of the cooking oven 10 with a cooking vessel 30 according to a third embodiment of the present invention. The cooking oven 10 includes the oven cavity 12 and the oven door 14 for closing said oven cavity 12. Further, the cooking oven 10 comprises the electric bottom heating element 16, the electric rear heating element 18 and the fan 20, wherein the fan 20 encloses the rear heating element 18.

The cooking oven 10 comprises the cavity sensor 24 arranged inside the oven cavity 12, wherein said cavity sensor 24 may be a temperature sensor and/or a humidity sensor. The cooking oven 10 includes the control unit 26 electrically connected to the cavity sensor 24, the fan 20 and the heating elements 16 and 18. The control unit 26 may be designed as either an integrated part of the cooking oven 10 or an external device arranged out of the cooking oven 10.

The cooking oven 10 according to the third embodiment does not comprise any steam generator, so that the cooking oven 10 as such is designed without steam cooking function.

The cooking vessel 30 according to the third embodiment is arranged inside the oven cavity 12 of the cooking oven 10. Also in this example, the cooking oven 10 comprises a grid 38 or tray 38 insertable or inserted inside the oven cavity 12, wherein the cooking vessel 30 is placed upon said grid 38 or tray 38. The food stuff 40 is arranged inside the cooking vessel 30. The cooking vessel 30 includes the lower part 44 and the upper part 46. The cooking vessel 30 is confined, but not hermetically sealed. An overpressure inside the cooking vessel 30 is not required. The cooking vessel 30 is designed that different temperature and humidity may occur inside said cooking vessel 30 on the one hand and in the residual oven cavity 12 on the other hand.

Furthermore, the cooking vessel 30 includes the vessel sensor 32 provided as temperature sensor and/or humidity sensor. In this example, the vessel sensor 32 is arranged in the upper part 46 of the cooking vessel 30. The vessel sensor 32 is connected or connectable to the control unit 26 of the cooking oven 10. Also in this embodiment, the vessel sensor 32 inside the cooking vessel 30 allows the homogeneous temperature control regardless of the characteristics of the cooking vessel 30 and of the food stuff 40 to be treated, so that the closed loop control is achieved.

When the oven cavity 12 is heated that the surface of the food stuff 40 reaches a temperature more than 100°C, then the moisture in the outer portions of the food stuff 40 is evaporated. Then, the emerging steam is used for steam cooking of the food stuff 40 in the cooking vessel 30.

Also the cooking vessel 30 according to the third embodiment allows steam cooking function in a conventional cooking oven 10, which is rather not provided for steam cooking function.

The cooking vessel 30 according to the present invention may be made of different materials. For example, the cooking vessel 30 is made of Pyrex glass, aluminium, stainless steel and/or ceramic pottery. The wall thickness of the cooking vessel 30 ranges between 1 mm and 10 mm depending on the material of said cooking vessel 30. For example, if the cooking vessel 30 is made of metal, e.g. aluminium or stainless steel, then the wall thickness is about 1 mm. Contrariwise, if the cooking vessel 30 is made of ceramic pottery, then the wall thickness is about 10 mm.

The thermal conductivity of the wall of the cooking vessel 30 depends on the material and the wall thickness. For example, the specific thermal conductivity of aluminium is about 290 W/(m·K), while the specific thermal conductivity of ceramic pottery is about 0.5 W/(m·K).

For example, the base area of the cooking vessel 30 may be circular, elliptic, square or rectangular. Further, the shape of the cooking vessel 30 may be tapered bottom up or buckled. Moreover, the cooking vessel 30 may include handles in order to allow an easy handling in hot conditions.

The maximum overpressure inside the cooking vessel 30 is about 500 Pa in the case of an atmospheric steam generation system. In the case of a pressured steam generation system, the maximum overpressure inside the cooking vessel 30 is between 0.8 bar and 1.0 bar.

### List of reference numerals

- 10: cooking oven
- 12: oven cavity
- 14: oven door
- 16: bottom heating element
- 18: rear heating element
- 20: fan
- 22: steam generator
- 24: cavity sensor
- 26: control unit
- 30: cooking vessel
- 32: vessel sensor
- 34: steam inlet
- 36: steam outlet
- 38: grid, tray
- 40: food stuff
- 42: steam
- 44: lower part
- 46: upper part
- 48: water basin

## Claims

1. A cooking oven (10) comprising at least one cooking vessel (30) arrangeable or arranged inside an oven cavity (12) of said cooking oven (10), wherein
- the cooking vessel (30) is provided for receiving food stuff (40) being prepared by a steam cooking process,
- the cooking vessel (30) is confined or confinable, so that a higher humidity inside said cooking vessel (30) as outside said cooking vessel (30) is allowed,
- the cooking vessel (30) is confined or confinable, but not hermetically sealed, in such a way, that an overpressure inside said cooking vessel (30) is limited and different temperature and humidity may occur inside said cooking vessel (30) on the one hand and in the residual oven cavity (12) on the other hand,
- the cooking vessel (30) comprises at least one vessel sensor (32) arranged inside said cooking vessel (30) and connectable or connected to a control unit (26) of the cooking oven (10),
- the vessel sensor (32) includes at least one humidity sensor and/or temperature sensor, and
- the control unit (26) is provided for controlling at least one heating element (16, 18, 20) of the cooking oven (10),
**characterised in that**
the control unit (26) is provided for controlling a steam generator (24) of the cooking oven (10), in dependence of the humidity and/or the temperature inside the cooking vessel (30), wherein the heating element (16, 18, 20) and the steam generator (24) are arranged out of the cooking vessel (30).

2. The cooking oven (10) according to claim 1,
**characterised in that**
the cooking vessel (30) includes a lower part (44) and an upper part (46) forming the confined or confinable cooking vessel (30).

3. The cooking oven (10) according to claim 2,
**characterised in that**
at least one sealing is arranged between the lower part (44) and the upper part (46) of the cooking vessel (30), wherein said sealing allows the higher humidity inside said cooking vessel (30) as outside said cooking vessel (30).

4. The cooking oven (10) according to claim 3,
**characterised in that**
the at least one sealing is made of one or more food grade silicone materials.

5. The cooking oven (10) according to any one of the preceding claims,
**characterised in that**
the cooking vessel (30) includes a steam inlet (34) connectable or connected to a steam generator (24) of the cooking oven (10).

6. The cooking oven (10) according to claim 5,
**characterised in that**
the cooking vessel (30) includes a water basin (48) arranged at the bottom of said cooking vessel (30), wherein the food stuff (40) is arranged or arrangeable above said water basin (48)

7. The cooking oven (10) according to any one of the preceding claims,
**characterised in that**
the control unit (26) is connected or connectable to at least one cavity sensor (24) of the cooking oven (10).

8. The cooking oven (10) according to any one of the preceding claims,
**characterised in that**
the cooking oven (10) comprises at least one steam generator (34) and at least one steam outlet (36), wherein said steam outlet is arranged inside the oven cavity (12) and connected or connectable to the cooking vessel (30).

9. A method for performing a steam cooking process in an oven cavity (12) of a cooking oven (10), wherein
- food stuff (40) being prepared by the steam cooking process is arranged inside a confined, but not hermetically sealed, cooking vessel (30),
- the cooking vessel (30) allows a higher humidity inside said cooking vessel (30) as outside said cooking vessel (30),
- an overpressure inside said cooking vessel (30) is limited,
- the cooking vessel (30) is arranged inside the oven cavity (12),
- the humidity and/or the temperature inside the cooking vessel (30) are detected by at least one vessel sensor (32) arranged inside said cooking vessel (30) and connected or connectable to a control unit (26) of the cooking oven (10),
- the detected humidity and/or temperature inside the cooking vessel (30) are used for controlling the steam cooking process, and
- at least one heating element (16, 18, 20) of the cooking oven (10) is controlled by the control unit (26) in dependence of the humidity and/or the temperature inside the cooking vessel (30),
**characterised in that**
a steam generator (24) of the cooking oven (10) is controlled by the control unit (26) in dependence of the humidity and/or the temperature inside the cooking vessel (30), wherein the heating element (16, 18, 20) and the steam generator (24) are arranged out of the cooking vessel (30).

10. The method for according to claim 9,
**characterised in that**
the steam is generated by at least one steam generator (22) of the cooking oven (10), wherein the cooking vessel (30) is connected to said at least one steam generator (22).

11. The method for according to claim 9 or 10,
**characterised in that**
the steam is generated by water contained in a water basin (48) arranged at the bottom of said cooking vessel (30), when the oven cavity (12) is heated.

12. The method for according to any one of the claims 9 to 11,
**characterised in that**
the steam is generated by water, liquids and/or moisture contained in the food stuff (40), when the oven cavity (12) is heated.

13. The method for according to any one of the claims 9 to 12,
**characterised in that**
the method is performed by the cooking oven (10) according to any one of the claims 1 to 8.

## Patentansprüche

1. Garofen (10), der mindestens einen Garbehälter (30) umfasst, der in einem Ofenraum (12) des Garofens (10) anordenbar oder angeordnet ist, wobei
- der Garbehälter (30) zum Aufnehmen von Lebensmitteln (40), die durch einen Dampfgarvorgang zubereitet werden, vorgesehen ist,
- der Garbehälter (30) verschlossen oder verschließbar ist, so dass innerhalb des Garbehälters (30) eine höhere Feuchtigkeit als außerhalb des Garbehälters (30) möglich ist,
- der Garbehälter (30) derart verschlossen oder verschließbar, jedoch nicht hermetisch abgedichtet ist, dass ein Überdruck innerhalb des Garbehälters (30) begrenzt ist und eine unterschiedliche Temperatur und Feuchtigkeit innerhalb des Garbehälters (30) einerseits und in dem verbleibenden Ofenraum (12) andererseits auftreten kann,
- der Garbehälter (30) mindestens einen Behältersensor (32) umfasst, der innerhalb des Garbehälters (30) angeordnet und mit einer Steuereinheit (26) des Garofens (10) verbindbar oder verbunden ist,
- der Behältersensor (32) mindestens einen Feuchtigkeitssensor und/oder Temperatursensor umfasst, und
- die Steuereinheit (26) zum Steuern mindestens eines Heizelements (16, 18, 20) des Garofens (10) vorgesehen ist,
**dadurch gekennzeichnet, dass**
die Steuereinheit (26) zum Steuern eines Dampferzeugers (24) des Garofens (10) in Abhängigkeit von der Feuchtigkeit und/oder der Temperatur innerhalb des Garbehälters (30) vorgesehen ist,
wobei das Heizelement (16, 18, 20) und der Dampferzeuger (24) außerhalb des Garbehälters (30) angeordnet sind.

2. Garofen (10) nach Anspruch 1,
**dadurch gekennzeichnet, dass**
der Garbehälter (30) einen unteren Teil (44) und einen oberen Teil (46) umfasst, die den verschlossenen oder verschließbaren Garbehälter (30) bilden.

3. Garofen (10) nach Anspruch 2,
**dadurch gekennzeichnet, dass**
mindestens eine Dichtung zwischen dem unteren Teil (44) und dem oberen Teil (46) des Garbehälters (30) angeordnet ist, wobei die Dichtung die höhere Feuchtigkeit innerhalb des Garbehälters (30) als außerhalb des Garbehälters (30) ermöglicht.

4. Garofen (10) nach Anspruch 3,
**dadurch gekennzeichnet, dass**
die mindestens eine Dichtung aus einem oder mehreren lebensmittelechten Silikonmaterialien besteht.

5. Garofen (10) nach einem der vorhergehenden Ansprüche,
**dadurch gekennzeichnet, dass**
der Garbehälter (30) einen Dampfeinlass (34) umfasst, der mit einem Dampferzeuger (24) des Garofens (10) verbindbar oder verbunden ist.

6. Garofen (10) nach Anspruch 5,
**dadurch gekennzeichnet, dass**
der Garbehälter (30) eine Wasserschale (48) umfasst, die am Boden des Garbehälters (30) angeordnet ist, wobei die Lebensmittel (40) über der Wasserschale (48) angeordnet oder anordenbar sind.

7. Garofen (10) nach einem der vorhergehenden Ansprüche,
**dadurch gekennzeichnet, dass**
die Steuereinheit (26) mit mindestens einem Raumsensor (24) des Garofens (10) verbunden oder verbindbar ist.

8. Garofen (10) nach einem der vorhergehenden Ansprüche,
**dadurch gekennzeichnet, dass**
der Garofen (10) mindestens einen Dampferzeuger (34) und mindestens einen Dampfauslass (36) umfasst, wobei der Dampfauslass innerhalb des Ofenraums (12) angeordnet und mit dem Garbehälter (30) verbunden oder verbindbar ist.

9. Verfahren zum Durchführen eines Dampfgarvorgangs in einem Ofenraum (12) eines Garofens (10), wobei
- Lebensmittel (40), die durch den Dampfgarvorgang zubereitet werden, innerhalb eines verschlossenen, jedoch nicht hermetisch abgedichteten Garbehälters (30) angeordnet sind,
- der Garbehälter (30) innerhalb des Garbehälters (30) eine höhere Feuchtigkeit als außerhalb des Garbehälters (30) ermöglicht,
- ein Überdruck innerhalb des Garbehälters (30) begrenzt ist,
- der Garbehälter (30) innerhalb des Ofenraums (12) angeordnet ist,
- die Feuchtigkeit und/oder die Temperatur innerhalb des Garbehälters (30) durch mindestens einen Behältersensor (32) detektiert werden, der innerhalb des Garbehälters (30) angeordnet und mit einer Steuereinheit (26) des Garofens (10) verbunden oder verbindbar ist,
- die detektierte Feuchtigkeit und/oder Temperatur innerhalb des Garbehälters (30) zum Steuern des Dampfgarvorgangs verwendet werden, und
- mindestens ein Heizelement (16, 18, 20) des Garofens (10) durch die Steuereinheit (26) in Abhängigkeit von der Feuchtigkeit und/oder der Temperatur innerhalb des Garbehälters (30) gesteuert wird,
**dadurch gekennzeichnet, dass**
ein Dampferzeuger (24) des Garofens (10) durch die Steuereinheit (26) in Abhängigkeit von der Feuchtigkeit und/oder der Temperatur innerhalb des Garbehälters (30) gesteuert wird, wobei das Heizelement (16, 18, 20) und der Dampferzeuger (24) außerhalb des Garbehälters (30) angeordnet sind.

10. Verfahren zum nach Anspruch 9,
**dadurch gekennzeichnet, dass**
der Dampf durch mindestens einen Dampferzeuger (22) des Garofens (10) erzeugt wird, wobei der Garbehälter (30) mit dem mindestens einen Dampferzeuger (22) verbunden ist.

11. Verfahren zum nach Anspruch 9 oder 10,
**dadurch gekennzeichnet, dass**
der Dampf durch Wasser, das in einer am Boden des Garbehälters (30) angeordneten Wasserschale (48) enthalten ist, erzeugt wird, wenn der Ofenraum (12) beheizt wird.

12. Verfahren zum nach einem der Ansprüche 9 bis 11,
**dadurch gekennzeichnet, dass**
der Dampf durch Wasser, Flüssigkeiten und/oder Feuchtigkeit, die in den Lebensmitteln (40) enthalten sind, erzeugt wird, wenn der Ofenraum (12) beheizt wird.

13. Verfahren zum nach einem der Ansprüche 9 bis 12,
**dadurch gekennzeichnet, dass**
das Verfahren durch den Garofen (10) nach einem der Ansprüche 1 bis 8 durchgeführt wird.

## Revendications

1. Four de cuisson (10) comprenant au moins un récipient de cuisson (30) agençable ou agencé à l'intérieur d'une cavité (12) de four dudit four de cuisson (10),
- le récipient de cuisson (30) servant à recevoir des aliments (40) qui sont préparés par un processus de cuisson à la vapeur,
- le récipient de cuisson (30) étant confiné ou confinable de façon à permettre une humidité plus élevée à l'intérieur dudit récipient de cuisson (30) qu'à l'extérieur dudit récipient de cuisson (30),
- le récipient de cuisson (30) étant confiné ou confinable, mais pas hermétiquement clos, de manière à limiter une surpression à l'intérieur dudit récipient de cuisson (30) et à permettre la présence d'une température et d'une humidité différentes à l'intérieur dudit récipient de cuisson (30) d'autre part et dans la cavité (12) de four résiduelle d'autre part,
- le récipient de cuisson (30) comprenant au moins un capteur (32) de récipient agencé à l'intérieur dudit récipient de cuisson (30) et raccordable ou raccordé à une unité de commande (26) du four de cuisson (10),
- le capteur (32) de récipient comportant au moins un capteur d'humidité et/ou capteur de température, et
- l'unité de commande (26) servant à commander au moins un élément chauffant (16, 18, 20) du four de cuisson (10),
**caractérisé en ce que**
l'unité de commande (26) sert à commander un générateur de vapeur (24) du four de cuisson (10) en fonction de l'humidité et/ou de la température à l'intérieur du récipient de cuisson (30),
l'élément chauffant (16, 18, 20) et le générateur de vapeur (24) étant agencés hors du récipient de cuisson (30).

2. Four de cuisson (10) selon la revendication 1,
**caractérisé en ce que**
le récipient de cuisson (30) comporte une partie inférieure (44) et une partie supérieure (46) formant le récipient de cuisson (30) confiné ou confinable.

3. Four de cuisson (10) selon la revendication 2,
**caractérisé en ce que**
un moins un élément d'étanchéité est agencé entre la partie inférieure (44) et la partie supérieure (46) du récipient de cuisson (30), ledit élément d'étanchéité permettant l'humidité plus élevée à l'intérieur dudit récipient de cuisson (30) qu'à l'extérieur dudit récipient de cuisson (30).

4. Four de cuisson (10) selon la revendication 3,
**caractérisé en ce que**
l'au moins un élément d'étanchéité est constitué d'un ou de plusieurs matériaux à base de silicone de qualité alimentaire.

5. Four de cuisson (10) selon l'une quelconque des revendications précédentes,
**caractérisé en ce que**
le récipient de cuisson (30) comporte une entrée de vapeur (34) raccordable ou raccordée à un générateur de vapeur (24) du four de cuisson (10).

6. Four de cuisson (10) selon la revendication 5,
**caractérisé en ce que**
le récipient de cuisson (30) comporte une cuvette d'eau (48) agencée au fond dudit récipient de cuisson (30), les aliments (40) étant agencés ou agençables au-dessus de ladite cuvette d'eau (48).

7. Four de cuisson (10) selon l'une quelconque des revendications précédentes,
**caractérisé en ce que**
l'unité de commande (26) est raccordée ou raccordable à au moins un capteur (24) de cavité du four de cuisson (10).

8. Four de cuisson (10) selon l'une quelconque des revendications précédentes,
le four de cuisson (10) étant **caractérisé en ce que** il comprend au moins un générateur de vapeur (34) et au moins une sortie de vapeur (36), ladite sortie de vapeur étant agencée à l'intérieur de la cavité (12) de four et raccordée ou raccordable au récipient de cuisson (30).

9. Procédé de réalisation d'un processus de cuisson à la vapeur dans une cavité (12) de four d'un four de cuisson (10),
- des aliments (40) qui sont préparés par le processus de cuisson à la vapeur étant agencés à l'intérieur d'un récipient de cuisson (30) confiné mais pas hermétiquement clos,
- le récipient de cuisson (30) permettant une humidité plus élevée à l'intérieur dudit récipient de cuisson (30) qu'à l'extérieur dudit récipient de cuisson (30),
- une surpression à l'intérieur dudit récipient de cuisson (30) étant limitée,
- le récipient de cuisson (30) étant agencé à l'intérieur de la cavité (12) de four,
- l'humidité et/ou la température à l'intérieur du récipient de cuisson (30) étant détectées par au moins un capteur (32) de récipient agencé à l'intérieur dudit récipient de cuisson (30) et raccordé ou raccordable à une unité de commande (26) du four de cuisson (10),
- l'humidité et/ou la température détectées à l'intérieur du récipient de cuisson (30) étant utilisées pour commander le processus de cuisson à la vapeur, et
- au moins un élément chauffant (16, 18, 20) du four de cuisson (10) étant commandé par l'unité de commande (26) en fonction de l'humidité et/ou de la température à l'intérieur du récipient de cuisson (30), **caractérisé en ce que**
un générateur de vapeur (24) du four de cuisson (10) est commandé par l'unité de commande (26) en fonction de l'humidité et/ou de la température à l'intérieur du récipient de cuisson (30), l'élément chauffant (16, 18, 20) et le générateur de vapeur (24) étant agencés hors du récipient de cuisson (30).

10. Procédé de selon la revendication 9,
**caractérisé en ce que**
la vapeur est générée par au moins un générateur de vapeur (22) du four de cuisson (10), le récipient de cuisson (30) étant raccordé audit au moins un générateur de vapeur (22).

11. Procédé de selon la revendication 9 ou 10,
**caractérisé en ce que**
la vapeur est générée par de l'eau contenue dans une cuvette d'eau (48) agencée au fond dudit récipient de cuisson (30), lorsque la cavité (12) de four est chauffée.

12. Procédé de selon l'une quelconque des revendications 9 à 11,
**caractérisé en ce que**
la vapeur est générée par de l'eau, des liquides et/ou de l'humidité contenus dans les aliments (40), lorsque la cavité (12) de four est chauffée.

13. Procédé de selon l'une quelconque des revendications 9 à 12,
le procédé étant **caractérisé en ce que**
il est réalisé par le four de cuisson (10) selon l'une quelconque des revendications 1 à 8.
